# EUROPÄISCHE PATENTSCHRIFT

(11) **EP 1 890 893 B1**
(45) Veröffentlichungstag und Bekanntmachung des Hinweises auf die Patenterteilung: **21.07.2010**
(21) Anmeldenummer: 06742853.2
(22) Anmeldetag: 10.05.2006
(51) Int. Cl.: B60J 3/02

(54) **SONNENSCHUTZBLENDE FÜR EIN KRAFTFAHRZEUG**
SUN VISOR FOR A MOTOR VEHICLE
PARE-SOLEIL POUR VÉHICULE À MOTEUR

(30) Priorität: 02.06.2005 DE 102005025262
(43) Veröffentlichungstag der Anmeldung: 27.02.2008
(73) Patentinhaber: AUDI AG, 85045 Ingolstadt (DE)
(72) Erfinder: BÖHNER, Jan, 85049 Ingolstadt (DE); FRANZ, Hans-Jürgen, 85057 Ingolstadt (DE); PFLAUMBAUM, Klaus, 85060 Gaimersheim (DE)
(74) Vertreter: Mader, Wilfried
(86) Internationale Anmeldenummer: PCT/EP2006/004367
(87) Internationale Veröffentlichungsnummer: WO 2006/128558

(56) Entgegenhaltungen:
- DE-A1- 3 710 429
- FR-A- 1 603 032
- GB-A- 402 700
- US-A- 5 902 002

## Beschreibung

Die vorliegende Erfindung bezieht sich auf eine Sonnenschutzblende für ein Kraftfahrzeug, insbesondere auf eine im Dachbereich des Kraftfahrzeuges zu befestigende Sonnenblende.

Es sind Sonnenschutzblenden gebräuchlich, die vom Dachhimmel nach unten geschwenkt werden können, worauf sie danach um einen Drehpunkt im oberen Bereich der A-Säule auch zur Türseitenscheibe gedreht werden können.

Diese Sonnenschutzblenden haben sich jedoch in mehrerlei Hinsicht als unbefriedigend herausgestellt. Beim Drehen zur Seitenscheibe stößt häufig eine Schmalseite der Sonnenschutzblende gegen den Kopf des Kraftfahrzeuginsassen, der die Blende zur Seite schwenkt. Der Fahrzeuginsasse muss daher in lästiger Weise mit dem Kopf eine Ausweichbewegung ausführen, was darüber hinaus seine Aufmerksamkeit beeinträchtigt.

Bei einer bekannten Sonnenblende gemäß der Druckschrift FR-B 16 03 032 ist eine mit unterschiedlich transparenten Folien ausrüstbare Sonnenschutzblende längs einer Haltestange verschiebbar und mit einem Gewindefeststellring in der gewünschten Position festklemmbar. Die Haltestange ist ihrerseits wiederum gegenüber einer abgewinkelten Gelenkstange verschiebbar und mit einem weiteren Gewindering feststellbar, die gelenkig an einer ortsfest anzubringenden Fußplatte gelagert ist.

An diesem Ansatz gemäß dem Stand der Technik hat sich jedoch die Tatsache als nachteilig herausgestellt, dass die Handhabung einer derartigen Sonnenschutzblende durch die vielen Feststellringe sehr umständlich und daher für ein Kraftfahrzeug wenig geeignet ist. Ein Verdrehen des Blendenkörpers um eine zur Haltestange senkrechte Achse ist hierbei zudem nicht möglich. Würde eine derartige Sonnenschutzblende in einem Kraftfahrzeug montiert, würden beim Verschwenken von der Windschutzscheibe zu einer Seitenscheibe wiederum die oben bereits geschilderten Probleme auftauchen.

Die Patentschrift DE 37 10 429 C2 beschreibt eine Sonnenschutzblende, die mit einer Haltestange gekoppelt ist. Der Blendenkörper der Sonnenschutzblende ist gegenüber der Haltestange um eine in Längsrichtung der Haltestange verlaufende Schwenkachse drehbar, was dadurch erreicht wird, dass die Haltestange aus zwei teleskopisch ineinander schiebbaren Teilen besteht, die relativ zueinander um ihre gemeinsame Längsachse ebenfalls verdrehbar sind. Das äußere Teilstück der Haltestange weist ein rechtwinklig abgebogenes Ende auf, das einen Gelenkzapfen für den Blendenkörper bildet. Der Blendenkörper ist auf diese Weise um die Drehachse schwenkbar, sofern die Sonnenschutzblende in ihre Gebrauchslage heruntergeschwenkt worden ist. Die Haltestange ist frei in der Fahrgastzelle im Bereich des Dachhimmels vorgesehen und über ein karosseriefestes Gelenk nahe der Seitenscheibe gelagert.

An diesem Ansatz gemäß dem Stand der Technik hat sich jedoch die Tatsache als nachteilig herausgestellt, dass die Haltestange bei einer in die Gebrauchsstellung geklappten Sonnenschutzblende im Inneren der Fahrgastzelle freiliegt, so dass im Falle eines Unfalls der Kraftfahrzeuginsasse beispielsweise mit seinem Kopf auf der Haltestange auftreffen und Verletzungen erleiden kann. Zudem ist die durch die Haltestange gebildete Schwenkachse nahe zum Fahrzeuginsassen angeordnet, so dass gegebenenfalls der Fahrzeuginsasse bei einem Verschwenken der Sonnenschutzblende ebenfalls mit dem Kopf eine Ausweichbewegung ausführen muss und dadurch vom Straßenverkehr abgelenkt wird.

Somit liegt der vorliegenden Erfindung die Aufgabe zugrunde, die oben genannten Nachteile zu beseitigen und insbesondere eine Sonnenschutzblende für ein Kraftfahrzeug auszugestalten, welche das Verletzungsrisiko weitestgehend ausschaltet und eine durchgängige Verstellbewegung der Sonnenschutzblende ohne einem Ausweichmanöver durch den Insassen gewährleistet.

Diese Aufgabe wird erfindungsgemäß durch die Sonnenschutzblende mit den Merkmalen des Patentanspruchs 1 gelöst.

Die der vorliegenden Erfindung zugrunde liegende Idee besteht darin, dass die Sonnenschutzblende einen flächigen, langgestreckten Hauptblendenkörper aufweist, welcher an einer in etwa senkrecht zur Längserstreckung des Hauptblendenkörpers verlaufenden Drehachse drehbar gelagert ist; wobei die Drehachse mit einer Hauptklappachse zum Klappen des Hauptblendenkörpers aus einer Nichtgebrauchsstellung in eine Gebrauchsstellung und vice versa gekoppelt ist, welche in der Nichtgebrauchsstellung parallel zur Längserstreckung des Hauptblendenkörpers und beabstandet zu demselben in dem Dach des Kraftfahrzeuges integriert ist.

Somit weist die vorliegende Erfindung gegenüber den bekannten Ansätzen gemäß dem Stand der Technik den Vorteil auf, dass die Hauptklappachse zum Klappen des Hauptblendenkörpers aus der Nichtgebrauchsstellung in eine Gebrauchsstellung nicht in der Sonnenschutzblende angeordnet ist, sondern dass eine Lagerung der Klappachse extern im Dachbereich des Kraftfahrzeuges möglich ist. Somit kann die Klappachse beispielsweise im Bereich vor dem Dachrahmen angeordnet werden, d.h. in dem nahe der Windschutzscheibe vorgesehen Bereich weit entfernt vom Insassen, so dass eine Klappbewegung des Blendenkörpers keine Ausweichbewegungen des Insassen zur Folge hat.

Ferner kann der Blendenkörper aufgrund der externen Lagerung der Hauptklappachse dünner ausgebildet werden, so dass der benötigte Bauraum vorteilhaft reduziert wird.

Ein weiterer Vorteil besteht darin, dass die Klappachse aufgrund der Integration in den Dachbereich, beispielsweise in dem vorderen Strukturelement vor dem Dachrahmen, derart geschützt gelagert wird, dass der Insasse im Falle eines Unfalls nicht gegen die Klappachse mit seinem Kopf stoßen kann. Dadurch kann die Gefahr von Insassenverletzungen reduziert werden.

Aufgrund der externen Lagerung der Hauptklappachse kann auf einfache Weise ein Doppelblendensystem implementiert werden, worauf weiter unten ausführlicher eingegangen wird.

In den Unteransprüchen finden sich vorteilhafte Ausgestaltungen und Verbesserungen der im Patentanspruch 1 angegebenen Sonnenschutzblende.

Gemäß einer bevorzugten Weiterbildung ist die Hauptklappachse in Richtung der Kraftfahrzeugvorderseite vor dem Dachhimmel in dem Dachrahmen bzw. dem zugeordneten Dachstrukturelement in Kraftfahrzeugquerrichtung integriert. Dadurch wird die Hauptklappachse möglichst weit von dem Fahrzeuginsassen entfernt positioniert, so dass die Klappbewegung ohne einer Ausweichbewegung des Insassen bewerkstelligt werden kann.

Vorzugsweise ist die Hauptklappachse in einem in dem Dachrahmen integrierten Hauptlager drehbar gelagert, wobei das Hauptlager beispielsweise eine Federeinrichtung aufweisen kann, die einer Vorspannung der Hauptklappachse in vorbestimmter Drehrichtung dient. Somit kehrt die Sonnenschutzblende bzw. der Blendenkörper ab beispielsweise einem vorbestimmten Winkel selbsttätig vorzugsweise in die Nichtgebrauchsstellung zurück und wird durch die Vorspannung in dieser Nichtgebrauchsstellung stabil aufbewahrt.

Gemäß einem weiteren bevorzugten Ausführungsbeispiel ist die Drehachse in dem Hauptblendenkörper quer zur Längserstreckung desselben in einem seitlichen Abschnitt drehbar gelagert. Vorzugsweise wird der Abschnitt des Hauptblendenkörpers gewählt, der zu der zugeordneten Seitenscheibe benachbart angeordnet ist. Somit kann der Blendenkörper bei einem seitlichen Lichteinfall in Richtung der Seitenscheibe auf einfache und zuverlässige Weise gedreht werden.

Nach einer weiteren bevorzugten Weiterbildung weist die Drehachse ein abgebogenes Ende auf, welches mit der Hauptklappachse gekoppelt ist. Beispielsweise ist die Drehachse einteilig mit der Hauptklappachse über das abgebogene Ende verbunden oder mittels einer geeigneten Schwenkverbindung an diesem verschwenkbar angelenkt. Dies stellt einen einfachen und kostengünstigen Herstellungsaufwand dar.

Vorzugsweise ist in dem Bereich des Dachrahmens, in welchen die Drehachse in diesen einmündet, eine Blendeneinrichtung befestigt, welche mindestens eine Aussparung zum Ermöglichen einer Klappbewegung der Drehachse umfasst. Die Blendeneinrichtung dient einer ästhetischen Abdeckung zum Gewährleisten eines visuellen angenehmen Gesamteindrucks aus Sicht der Fahrgastzelle sowie einer stabilen Führung der Drehachse entlang der Aussparung bei einer Klappbewegung der Sonnenschutzblende.

Die Drehachse weist beispielsweise zusätzlich ein Scharnier, vorzugsweise in dem Bereich zwischen dem Hauptblendenkörper und dem abgebogenen Ende, d.h. der Klappachse, auf. Dieses Scharnier dient einer seitlichen Kippbewegung des Hauptblendenkörpers in Richtung der zugeordneten Seitenscheibe des Kraftfahrzeuges. Somit kann die Sonnenschutzblende nicht nur in Richtung der Seitenscheibe gedreht, sondern auch um einen vorbestimmten Winkel in eine geeignete Gebrauchsstellung abgewinkelt bzw. gekippt werden.

Nach einem weiteren bevorzugten Ausführungsbeispiel weist der Hauptblendenkörper gegenüberliegend der Drehachse eine Rasteinrichtung auf, beispielsweise in Form einer Raststange, welche in eine zugeordnete Rastaufnahme ein- und ausclipsbar ist. Die Rastaufnahme ist wiederum vorzugsweise mit der Hauptklappachse gekoppelt, so dass der Hauptblendenkörper bei einer Verrastung durch zwei Verbindungsstellen um die Hauptklappachse klappbar ist.

Gemäß einer weiteren bevorzugten Weiterbildung ist ein weiterer flächiger, langgestreckter Blendenkörper als Hilfsblendenkörper vorgesehen. Der Hilfsblendenkörper ist vorzugsweise in der Nichtgebrauchsstellung zwischen dem Hauptblendenkörper und dem zugeordneten Dachrahmenabschnitt angeordnet. Der Hilfsblendenkörper ist vorteilhaft über zugeordnete Bügelarme ebenfalls an der Hauptklappachse für ein Klappen des Hilfsblendenkörpers um die Hauptklappachse aus einer Nichtgebrauchsstellung in eine Gebrauchsstellung und vice versa verschwenkbar gelagert. Somit kann beispielsweise der Hauptblendenkörper bei einer schrägen Sonneneinstrahlung in Richtung der Seitenscheibe nach einem Aufklappen gedreht und gekippt werden, wobei der Hilfsblendenkörper bezüglich der Windschutzscheibe um einen vorbestimmten Winkel um die Hauptklappachse verschwenkt werden kann. Dadurch kann bei einer schrägen Sonneneinstrahlung und/oder bei einer beispielsweise kurvigen Fahrt über einen längeren Zeitraum ein Abdecken des relevanten Scheibenbereichs gewährleistet werden.

Vorzugsweise sind die Bügelarme des Hilfsblendenkörpers mittels einer weiteren Federeinrichtung für eine Vorspannung des Klappvorgangs analog zum Hauptblendenkörper in vorbestimmter Drehrichtung an der Hauptklappachse drehbar vorgespannt. Dadurch kehrt der Hilfsblendenkörper beispielsweise ab einem vorbestimmten Winkel selbsttätig in die Nichtgebrauchsstellung für eine Lagerung zurück.

Die Erfindung wird im Folgenden anhand von Ausführungsbeispielen unter Bezugnahme auf die beiliegenden Figuren der Zeichnung näher erläutert. Von den Figuren zeigen:
- Fig. 1: eine Querschnittsansicht einer Sonnenschutzblende gemäß ei- nem bevorzugten Ausführungsbeispiel der vorliegenden Erfin- dung in einer Nichtgebrauchsstellung sowie einer aufgeklappten Gebrauchsstellung;
- Fig. 2: eine perspektivische Ansicht eines Teilausschnitts der Sonnen- schutzblende gemäß dem bevorzugten Ausführungsbeispiel aus Fig. 1 aus Sicht in Richtung der Kraftfahrzeugrückseite;
- Fig. 3: eine Darstellung einer Einfach-Sonnenschutzblende gemäß ei- nem bevorzugten Ausführungsbeispiel der vorliegenden Erfin- dung;
- Fig. 4: eine schematische Darstellung einer der Einfach- Sonnenschutzblende aus Fig. 3 zugeordneten Blendeneinrich- tung gemäß einem bevorzugten Ausführungsbeispiel der vorlie- genden Erfindung;
- Fig. 5: eine Ansicht einer Sonnenschutzblende in drei verschiedenen Gebrauchsstellungen gemäß einem bevorzugten Ausführungs- beispiel der vorliegenden Erfindung aus Sicht in Kraftfahrzeug- vorderseite;
- Fig. 6: eine vergrößerte Darstellung des Teilausschnitts A aus Fig. 6;
- Fig. 7: eine Querschnittsansicht einer Doppel-Sonnenschutzblende ge- mäß einem bevorzugten Ausführungsbeispiel der vorliegenden Erfindung;
- Fig. 8: eine schematische Darstellung der Doppel-Sonnenschutzblende aus Fig. 7 im nicht integrierten Zustand; und
- Fig. 9: ein schematische Ansicht der Doppel-Sonnenschutzblende aus den Fig. 7 und 8 aus Sicht in Richtung der Kraftfahrzeugrückseite im integrierten Zustand.

In den Figuren der Zeichnung bezeichnen gleiche Bezugszeichen gleiche oder funktionsgleiche Komponenten, soweit nichts Gegenteiliges angegeben ist.

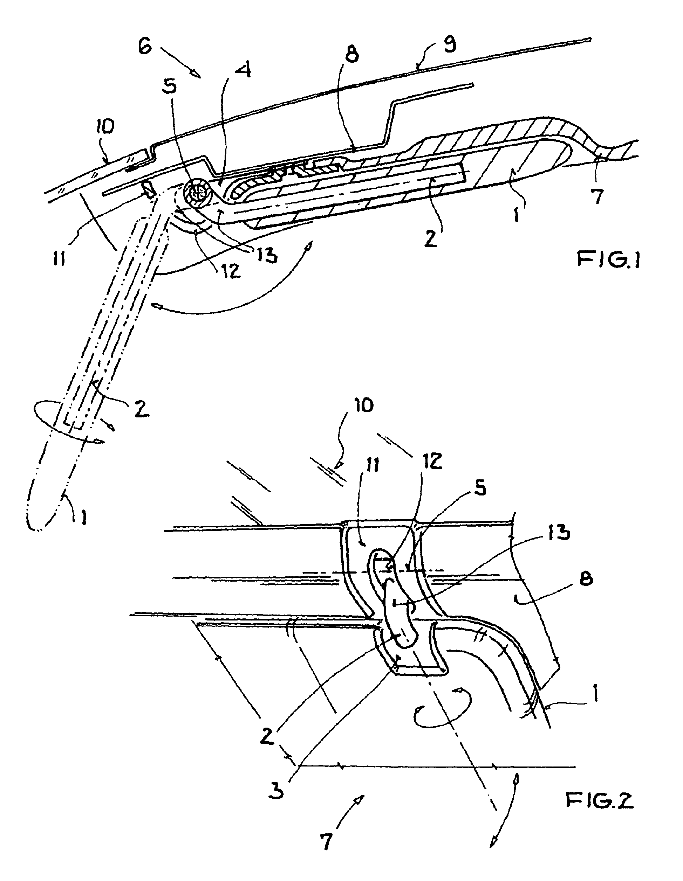

Im Folgenden wird ein erstes bevorzugtes Ausführungsbeispiel einer Sonnenschutzblende anhand der Fig. 1 und 2 näher erläutert. Fig. 1 illustriert eine Querschnittsansicht der Sonnenschutzblende in einer Nichtgebrauchsstellung und einer Gebrauchsstellung, und Fig. 2 illustriert eine perspektivische Teilansicht der Sonnenschutzblende aus Fig. 1 aus Sicht in Richtung der Kraftfahrzeugrückseite in einer Nichtgebrauchsstellung.

Wie in den Fig. 1 und 2 ersichtlich ist, besteht die Sonnenschutzblende gemäß dem vorliegenden Ausführungsbeispiel aus einem Hauptblendenkörper 1, welcher vorzugsweise als flächiger, langgestreckter Körper und aus einem lichtundurchlässigen Material gebildet ist.

In den Hauptblendenkörper 1 ist eine Drehachse 2 vorzugsweise in Richtung quer zur Längserstreckung des Hauptblendenköpers 1 drehbar integriert, derart, dass der Hauptblendenkörper 1 um die Drehachse 2 gedreht bzw. verschwenkt werden kann. Somit kann der Hauptblendenkörper 1 in einer Gebrauchsstellung in Richtung einer zugeordneten Fensterscheibe gedreht werden, um die einfallende Lichtstrahlung abzuschirmen.

Beispielsweise weist der Hauptblendenkörper 1 in einem Seitenbereich, welcher dem der zugeordneten Fensterscheibe benachbarten Bereich des Blendenkörpers entspricht, einen Verstärkungsbereich 3 zur Aufnahme der Drehachse 2 auf, wie in Fig. 2 dargestellt ist.

Wie insbesondere in Fig. 1 illustriert ist, weist die Sonnenschutzblende eine weitere Schwenkachse in Form einer Klappachse 5 auf, welche vorzugsweise in einem Bereich des Kraftfahrzeugdaches 6 in Kraftfahrzeugquerrichtung integriert ist, der aus Sicht in Kraftfahrzeugvorderseite vor dem Dachhimmel 7 und somit weit von dem Insassen entfernt angeordnet ist. Beispielsweise wird die Klappachse 5 über ein Lager 6 an einem Strukturelement 8 der Dachkarosserie 9 befestigt. Als Befestigungsmittel kann beispielsweise eine Schraubverbindung, eine Schweißverbindung oder dergleichen dienen. Somit ist die Klappachse 5 in Kraftfahrzeug-Querrichtung vorzugsweise zwischen dem Dachhimmel 7 und der Kraftfahrzeug-Windschutzscheibe 10 angeordnet und befindet sich, wie oben bereits erwähnt, in einem Dachbereich, der weit entfernt von den Fahrzeuginsassen vorgesehen ist, so dass bei einer Klappbewegung des Hauptblendenkörpers 1 um die Klappachse 5 ein Ausweichmanöver des Fahrzeuginsassen vorteilhaft nicht erforderlich ist.

Wie aus den Fig. 1 und 2 zudem ersichtlich ist, weist die Sonnenschutzblende gemäß dem vorliegenden Ausführungsbeispiel eine Blendeneinrichtung 11 auf, welche hauptsächlich einer Abdeckung des Lagers 4 aus ästhetischen Gesichtspunkten dient. Die Blendeneinrichtung 11 ist mit mindestens einer Aussparung 12, im vorliegenden Ausführungsbeispiel mit zwei Aussparungen, versehen, um eine freie Schwenkbewegung der Drehachse 2 um die Klappachse 5 zu gewährleisten.

Die Drehachse 2 weist einen aus dem Hauptblendenkörper 1 hervorstehenden abgewinkelten Abschnitt 13 auf, welcher vorzugsweise einteilig mit der Hauptklappachse 5 ausgebildet ist. Allerdings ist es auch vorstellbar, dass der abgewinkelte Abschnitt 13 als abgebogenes Ende 13 der Drehachse 2 über eine Schwenkverbindung um die Hauptklappachse 5 verschwenkbar mit dieser gekoppelt ist.

Die Hauptklappachse 5, wie insbesondere in den Fig. 1 und 2 dargestellt ist, ist vorzugsweise vollständig in einem Dachelement in Fahrzeugquerrichtung integriert, wobei die Hauptklappachse 5 vorzugsweise in Richtung parallel zur Längserstreckung des Hauptblendenkörpers 1 und von diesem beabstandet in dem Dachelement angeordnet ist.

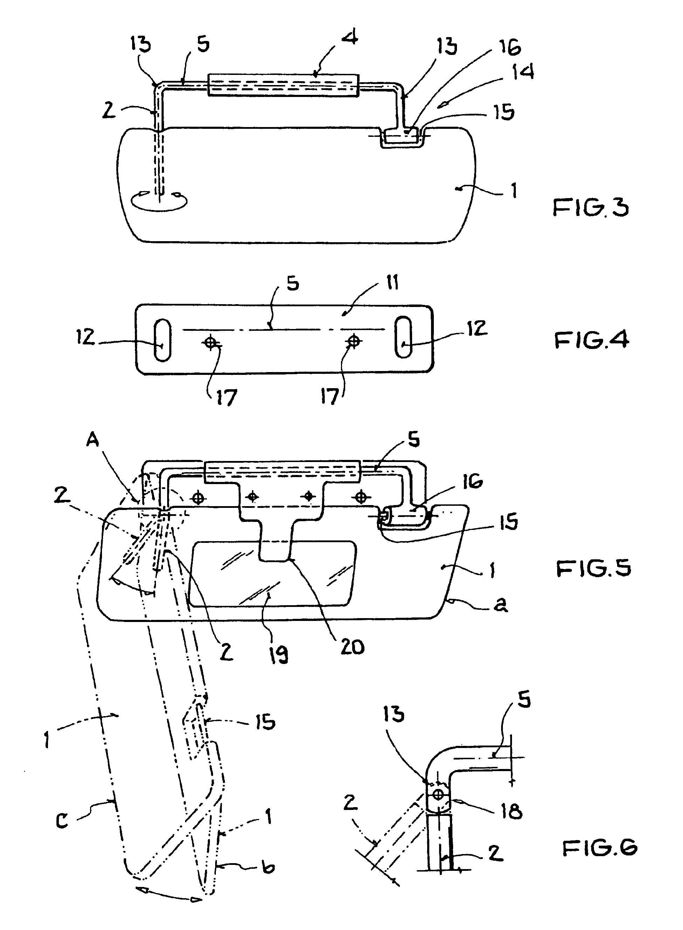

Der in Fig. 2 als Teilausschnitt dargestellte Aufbau bestehend aus Blendeneinrichtung 11 mitsamt Aussparung 12 sowie dem abgebogenen Ende 13 der Drehachse 1 ist vorzugsweise ein zweites Mal in Richtung der Kraftfahrzeugmitte versetzt vorgesehen, wie schematisch in Fig. 3 illustriert ist. Im Unterschied zu dem in den Fig. 1 und 2 dargestellten Aufbau ist die Drehachse 2 hierbei allerdings nicht als Drehachse in den Hauptblendenkörper 1 integriert, sondern wird durch einen Bügelarm mit zugeordneter Rastverbindung 14 ersetzt, wie in Fig. 3 ersichtlich ist. Die Rastverbindung 14 besteht beispielsweise aus einer Blendenkörper-seitigen Raststange 15 und einer konform zugeordneten, Bügelarm-seitigen Rastaufnahme 16, so dass die Raststange 15 bei einer vorbestimmten Krafteinwirkung in die Rastaufnahme 16 eingeclipst und aus dieser herausgeclipst werden kann. Die Rastverbindung 14 gewährleistet bei einem Herausclipsen der Raststange 15 aus der Rastaufnahme 16 eine einseitige Lagerung des Hauptblendenkörpers 1 an der Drehachse 2 und somit ein einseitige Drehung des Hauptblendenkörpers 1 um die Drehachse 2, beispielweise in Richtung der zugeordneten Seitenscheibe.

Die Hauptklappachse 5 ist, wie oben bereits erläutert, in einem in einem Dachelement integrierten Lager 4 drehbar gelagert. Beispielsweise ist die Hauptklappachse 5 über eine oder mehrere geeignete Federeinrichtungen mit dem Lager 4 derart gekoppelt, dass eine Vorspannung der Hauptklappachse 5 in vorbestimmter Drehrichtung erfolgt. Vorzugsweise ist eine Federvorspannung derart vorgesehen, dass eine selbsttätige Klappbewegung des Blendenkörpers 1 um die Hauptklappachse 5 ab einem vorbestimmten Winkel in Richtung des Kraftfahrzeugdaches zum Aufbewahren der Sonnenschutzblende in der Nichtgebrauchsstellung durchgeführt wird.

Fig. 4 illustriert eine schematische Ansicht einer Blendeneinrichtung 11 mit den beiden Aussparungen 12 zum Gewährleisten der Klappbewegung der jeweils zugeordneten abgebogenen Enden 13 der Drehachse 2 bzw. des Bügelarmes. Die Blendeneinrichtung 11 kann beispielsweise über zugeordnete Schraubenlöcher 17 an dem zugeordneten Dachbereich montiert werden.

Im Folgenden wird unter Bezugnahme auf die Fig. 5 und 6 ein weiteres Ausführungsbeispiel der vorliegenden Erfindung näher erläutert. Dabei illustriert Fig. 5 eine schematische Darstellung einer Sonnenschutzblende in einer ersten Gebrauchsstellung a, in einer zweiten Gebrauchsstellung b und in einer dritten Gebrauchsstellung c. Fig. 6 zeigt eine vergrößerte Darstellung des Ausschnitts A aus Fig. 5.

Wie in den Fig. 5 und 6 ersichtlich ist, weist die Drehachse 2 gemäß dem vorliegenden Ausführungsbeispiel ein Scharnier 18 derart auf, dass ein unterer Abschnitt der Drehachse 2 und somit der Hauptblendenkörper 1 relativ zu dem abgebogenen Ende 13 mit einem vorbestimmten Winkel beispielweise in Richtung einer zugeordneten Seitenfensterscheibe gekippt werden kann.

Im Folgenden wird unter Bezugnahme auf Fig. 5 eine Verwendung der erfindungsgemäßen Sonnenschutzblende näher erläutert. Ausgehend von einer nicht dargestellten Nichtgebrauchsstellung, in welcher der Hauptblendenkörper 1 an dem Fahrzeugdach anliegend aufbewahrt ist, wird der Hauptblendenkörper 1 um die Hauptklappachse 5 in eine erste Gebrauchsstellung a geklappt. Hierbei kann an der dem Fahrzeuginsassen zugewandten Fläche des Hauptblendenkörpers 1 beispielsweise ein Spiegel 19 mit zugeordneter Abdeckung sowie eine Kartenhalterung 20 vorteilhaft vorgesehen sein.

Durch Ausclipsen der Raststange 15 aus der Rastaufnahme 16 kann der Hauptblendenkörper 1 aus der ersten Gebrauchsstellung a um die Drehachse 2 in eine zweite Gebrauchsstellung b in Richtung der zugeordneten Seitenflächen der Fensterscheibe gedreht werden, wie in Fig. 5 ersichtlich ist.

Durch das zusätzliche Scharnier 18 kann der Hauptblendenkörper 1 zudem aus beispielsweise der zweiten Gebrauchsstellung b in eine gekippte dritte Gebrauchsstellung c um einen vorbestimmten Winkel, beispielsweise in Richtung der seitlichen Fensterscheibe, gekippt werden, wie ebenfalls in Fig. 5 illustriert ist.

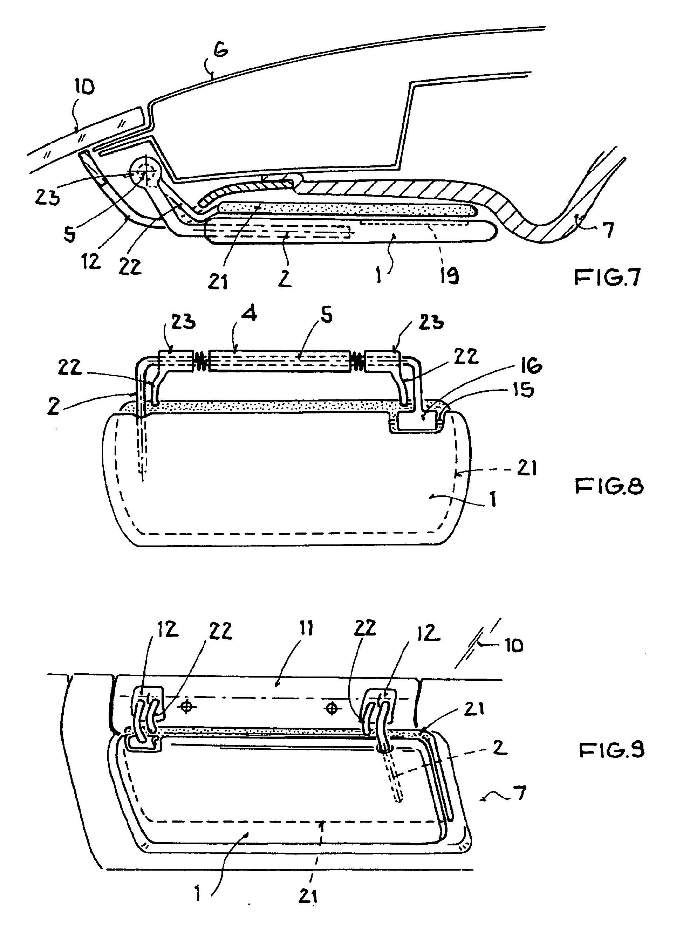

Im Folgenden wird unter Bezugnahme auf die Fig. 7 bis 9 ein weiteres bevorzugtes Ausführungsbeispiel der vorliegenden Erfindung näher erläutert. Fig. 7 illustriert dabei eine Querschnittsansicht einer Doppel-Sonnenschutzblende,

Fig. 8 eine schematische Vorderansicht der Doppel-Sonnenschutzblende in Fig. 7 aus Sicht in Richtung der Kraftfahrzeugvorderseite und Fig. 9 eine schematische Darstellung der Doppel-Sonnenschutzblende aus den Fig. 7 und 8 aus Sicht in Richtung der Fahrzeugrückseite.

Wie in den Fig. 7 bis 9 ersichtlich ist, weist die Doppel-Sonnenschutzblende einen Hauptblendenkörper 1 mit beispielsweise integriertem Spiegel 19 auf, der analog zu dem Hauptblendenkörper der obigen Ausführungsbeispiele ausgebildet, gelagert und um die jeweils zugeordneten Achsen verschwenkbar ist.

Im Unterschied zu den obigen Ausführungsbeispielen ist ein zweiter Blendenkörper in Form eines Hilfsblendenkörpers 21 vorgesehen, der in der Nichtgebrauchsstellung der Doppel-Sonnenschutzblende vorzugsweise zwischen dem zugeordneten Dachabschnitt und dem Hauptblendenkörper 1 angeordnet ist, wie insbesondere in Fig. 7 dargestellt ist.

Der Hilfsblendenkörper 21 weist beispielsweise symmetrisch angeordnete Bügelarme 22 auf, welche mit jeweils zugeordneten Abschnitten des Hilfsblendenkörpers 21 verbunden sind. Die Bügelarme 22 sind über geeignete Lager 23 an der Hauptklappachse 5 um die Hauptklappachse 5 verschwenkbar angebracht. Somit können der Hauptblendenkörper 1 und der Hilfsblendenkörper 21 unabhängig voneinander um die gemeinsame Hauptklappachse 5 verschwenkt werden, wobei die Hauptklappachse 5, wie oben bereits erläutert, vollständig außerhalb der beiden Blendenkörper 1 und 21 und beabstandet von diesen in einem zugeordneten Dachbereich des Kraftfahrzeuges integriert ist.

Somit kann der Hauptblendenkörper 1 in der oben beschriebenen Weise aus einer Nichtgebrauchsstellung in diverse Gebrauchsstellungen geklappt, gedreht und/oder gekippt werden, falls wiederum ein zusätzliches Scharnier in der Drehachse 2 vorhanden ist, wobei der Hilfsblendenkörper 12 gleichzeitig um die gemeinsame Hauptklappachse 5 verschwenkt werden kann. Vorzugsweise sind die Bügelarme 22 wiederum über Federeinrichtungen 24 mit der Hauptklappachse 5 drehbar gekoppelt und derart vorgespannt, dass eine selbsttätige Klappbewegung in vorbestimmter Richtung, beispielsweise in die Nichtgebrauchsstellung ab einem vorbestimmten Winkel, ausgeführt wird.

Es ist für einen Fachmann offensichtlich, dass auch der Hilfsblendenkörper 21 lediglich an einer Seite über eine Drehachse mit der Hauptklappachse gekoppelt sein kann, wobei die andere Seite analog zum Hauptblendenkörper 1 über eine Rastverbindung koppelbar ist. In diesem Fall wären sowohl der Hauptblendenkörper 1 als auch der Hilfsblendenkörper 21 um die Hauptklappachse 5 klappbar, um die jeweilige Drehachse drehbar und bei Vorhandensein eines zugeordneten Scharniers zusätzlich kippbar.

Wie in Fig. 9 dargestellt ist, weist die zugeordnete Blendeneinrichtung 11 der Doppel-Sonnenschutzblende geeignete Aussparungen 12 sowohl für eine freie Klappbewegung des Hauptblendenkörpers 1 als auch für eine freie Klappbewegung des Hilfsblendenkörpers 21 auf.

Somit schafft die vorliegenden Erfindung eine Einfach-Sonnenschutzblende bzw. eine Doppel-Sonnenschutzblende, bei welchen eine gemeinsame Klappachse außerhalb der jeweiligen Blendenkörper von diesen beabstandet vorgesehen und in einem zu der Windschutzscheibe benachbarten Bereich der Dachstruktur in den Dachrahmen integriert ist. Somit stellt die Klappachse keine Gefahr für eine Verletzung der Insassen im Falle eines Unfalls dar, da sie nicht freiliegend sondern verdeckt in der Dachstruktur integriert ist. Für einen weiteren Insassenschutz kann der Aufbau an einer vorbestimmten Stelle oder an mehreren vorbestimmten Stellen eine oder mehrere Sollbruchstellen aufweisen, welche im Falle eines Auftreffens eines beispielsweise Insassenkopfes definiert brechen und die jeweiligen Blendenkörper freigeben.

Durch die erfindungsgemäße Sonnenschutzblende können die Blendenkörper dünner ausgebildet werden, da die Hauptklappachse nicht in dem jeweiligen Blendenkörper integriert werden muss. Somit kann der benötigte Bauraum zusätzlich vorteilhaft reduziert werden.

Durch die externe Lagerung der Hauptklappachse kann die Sonnenschutzblende wahlweise mit lediglich einem Blendenkörper oder mit zwei oder mehreren Blendenkörpern vorgesehen bzw. nachgerüstet werden. Durch das erfindungsgemäße Vorsehen einer Klappachse, einer Drehachse sowie eines Kippscharniers können die Blendenkörper in beliebige Gebrauchsstellungen geklappt, gedreht und/oder gekippt werden. Dadurch wird eine optimale Abschirmung jeglicher einfallender Sonnenstrahlung gewährleistet, so dass der Kraftfahrzeugfahrer bei jeglicher Sonnenstellung nicht geblendet und die Gefahr eines Unfalls verringert wird.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise kann der Blendenkörper anstatt über zwei Arme lediglich über einen Arm mit der Hauptklappachse verbunden sein, wobei dieser Arm beispielsweise als Drehachse 2 mittig in dem Blendenkörper quer zur Längserstreckung integriert ist.

Ferner sind auch mehr als zwei Blendenkörper vorstellbar, die mit entsprechenden Achsen für einen Klappvorgang, einen Drehvorgang und/oder einen Kippvorgang ausgerüstet sind.

Die Sonnenschutzblende kann auch derart ausgerüstet sein, dass der Blendenkörper beispielsweise in der Nichtgebrauchsstellung als Abdeckung von zugeordneten Lagern dient, so dass auf eine zusätzliche Abdeckung verzichtet werden kann.

### BEZUGSZEICHENLISTE

- 1: Hauptblendenkörper
- 2: Drehachse
- 3: Verstärkungsbereich
- 4: Hauptlager
- 5: Hauptklappachse
- 6: Kraftfahrzeugdach
- 7: Dachhimmel
- 8: Strukturelement
- 9: Dachkarosserie
- 10: Windschutzscheibe
- 11: Blendeneinrichtung
- 12: Aussparung
- 13: abgebogenes Ende
- 14: Rastverbindung
- 15: Raststange
- 16: Rataufnahme
- 17: Schraubenlöcher
- 18: Scharnier
- 19: Spiegel
- 20: Kartenhalterung
- 21: Hilfsblendenkörper
- 22: Bügelarme
- 23: Lager
- 24: Federeinrichtung
- a: erste Gebrauchsstellung
- b: zweite Gebrauchsstellung
- c: dritte Gebrauchsstellung

## Patentansprüche

1. Sonnenschutzblende für ein Kraftfahrzeug, mit:
einem flächigen, langgestreckten Hauptblendenkörper (1), welcher an einer in etwa senkrecht zur Längserstreckung des Hauptblendenkörpers (1) verlaufenden Drehachse (2) drehbar gelagert ist;
wobei die Drehachse (2) mit einer Hauptklappachse (5) zum Klappen des Hauptblendenkörpers (1) aus einer Nichtgebrauchsstellung in eine Gebrauchsstellung (a; b; c) und vice versa gekoppelt ist, welche in der Nichtgebrauchsstellung parallel zur Längserstreckung des Hauptblendenkörpers (1) und beabstandet zu demselben in dem Dach (6) des Kraftfahrzeuges integriert ist.

2. Sonnenschutzblende nach Anspruch 1,
**dadurch gekennzeichnet,**
**dass** die Hauptklappachse (5) in Richtung der Kraftfahrzeugvorderseite gesehen vor dem Dachhimmel in den Dachrahmen in Kraftfahrzeugquerrichtung integriert ist.

3. Sonnenschutzblende nach Anspruch 1 oder 2,
**dadurch gekennzeichnet,**
**dass** die Hauptklappachse (5) in einem in dem Dachrahmen integrierten Hauptlager (4) drehbar gelagert ist.

4. Sonnenschutzblende nach Anspruch 3,
**dadurch gekennzeichnet,**
**dass** das Hauptlager (4) eine Federeinrichtung für eine Vorspannung der Hauptklappachse (5) in vorbestimmter Drehrichtung aufweist.

5. Sonnenschutzblende nach wenigstens einem der vorhergehenden Ansprüche,
**dadurch gekennzeichnet,**
**dass** die Drehachse (2) in dem Hauptblendenkörper (1) quer zur Längserstreckung desselben in einem seitlichen Abschnitt, vorzugsweise in dem zu der zugeordneten Seitenscheibe benachbarten Abschnitt, drehbar gelagert ist.

6. Sonnenschutzblende nach wenigstens einem der vorhergehenden Ansprüche,
**dadurch gekennzeichnet,**
**dass** die Drehachse (2) ein abgebogenes Ende (13) aufweist, welches mit der Hauptklappachse (5) gekoppelt ist.

7. Sonnenschutzblende nach wenigstens einem der vorhergehenden Ansprüche,
**dadurch gekennzeichnet,**
**dass** die Drehachse (2) einteilig mit der Hauptklappachse (5) über das abgebogene Ende (13) ausgebildet ist.

8. Sonnenschutzblende nach wenigstens einem der vorhergehenden Ansprüche,
**dadurch gekennzeichnet,**
**dass** die Drehachse (2) ein Scharnier (18) für ein seitliches Kippen des Hauptblendenkörpers (1) in Richtung der zugeordneten Seitenscheibe des Kraftfahrzeugs aufweist, welches vorzugsweise in dem Bereich zwischen dem Hauptblendenkörper (1) und der Hauptklappachse (5) vorgesehen ist.

9. Sonnenschutzblende nach wenigstens einem der vorhergehenden Ansprüche,
**dadurch gekennzeichnet,**
**dass** in dem Bereich des Dachrahmens, in welchen die Drehachse (2) einmündet, eine Blendeneinrichtung (11) vorgesehen ist, welche mindestens eine Aussparung (12) zum Ermöglichen einer Klappbewegung der Drehachse (2) aufweist.

10. Sonnenschutzblende nach wenigstens einem der vorhergehenden Ansprüche,
**dadurch gekennzeichnet,**
**dass** der Hauptblendenkörper (1) symmetrisch zur Drehachse (2) eine Rasteinrichtung (15) aufweist, welche in eine zugeordnete Rastaufnahme (16) ein- und ausclipsbar ist, wobei die Rastaufnahme (16) wiederum mit der Hauptklappachse (5) gekoppelt ist.

11. Sonnenschutzblende nach wenigstens einem der vorhergehenden Ansprüche,
**dadurch gekennzeichnet,**
**dass** ein weiterer flächiger, langgestreckter Blendenkörper als Hilfsblendenkörper (21) vorgesehen ist, welcher in der Nichtgebrauchsstellung zwischen dem Hauptblendenkörper (1) und dem Dachrahmen angeordnet ist.

12. Sonnenschutzblende nach Anspruch 11,
**dadurch gekennzeichnet,**
**dass** der Hilfsblendenkörper (21) über zugeordnete Bügelarme (22) an der Hauptklappachse (5) für ein Klappen des Hilfsblendenkörpers (21) um die Hauptklappachse (5) aus einer Nichtgebrauchsstellung in eine Gebrauchsstellung und vice versa verschwenkbar gelagert ist.

13. Sonnenschutzblende nach Anspruch 11 oder 12,
**dadurch gekennzeichnet,**
**dass** die Bügelarme (22) des Hilfsblendenkörpers (21) mittels einer Federeinrichtung (24) für eine Vorspannung des Klappvorgangs in vorbestimmter Drehrichtung an der Hauptklappachse (5) drehbar vorgespannt sind.

## Claims

1. Sun visor for a motor vehicle, with:
a planar, elongate main visor body (1) which is mounted rotatably on a rotary spindle (2) running approximately perpendicularly to the longitudinal extent of the main visor body (1);
wherein the rotary spindle (2) is coupled to a main swivel spindle (5) for swivelling the main visor body (1) from a not-in-use position into a use position (a; b; c) and vice versa, the main swivel spindle, in the not-in-use position, being integrated in the roof (6) of the motor vehicle parallel to the longitudinal extent of the main visor body (1) and at a distance from same.

2. Sun visor according to Claim 1,
**characterized**
**in that** the main swivel spindle (5) is integrated, as seen in the direction of a front side of the motor vehicle, in the roof frame in the transverse direction of the motor vehicle in front of the roof lining.

3. Sun visor according to Claim 1 or 2,
**characterized**
**in that** the main swivel spindle (5) is mounted rotatably in a main bearing (4) integrated in the roof frame.

4. Sun visor according to Claim 3,
**characterized**
**in that** the main bearing (4) has a spring device for prestressing the main swivel spindle (5) in a predetermined direction of rotation.

5. Sun visor according to at least one of the preceding claims,
**characterized**
**in that** the rotary spindle (2) is mounted rotatably in the main visor body (1) transversely with respect to the longitudinal extent thereof in a lateral section, preferably in the section adjacent to the associated side window.

6. Sun visor according to at least one of the preceding claims,
**characterized**
**in that** the rotary spindle (2) has a bent end (13) which is coupled to the main swivel spindle (5).

7. Sun visor according to at least one of the preceding claims,
**characterized**
**in that** the rotary spindle (2) is designed as a single part with the main swivel spindle (5) via the bent end (13).

8. Sun visor according to at least one of the preceding claims,
**characterized**
**in that** the rotary spindle (2) has a hinge (18) for laterally tilting the main visor body (1) in the direction of the associated side window of the motor vehicle, the hinge preferably being provided in the region between the main visor body (1) and the main swivel spindle (5).

9. Sun visor according to at least one of the preceding claims,
**characterized**
**in that** a visor device (11) is provided in the region of the roof frame into which the rotary spindle (2) leads, said visor device having at least one cutout (12) for permitting a swivelling movement of the rotary spindle (2).

10. Sun visor according to at least one of the preceding claims,
**characterized**
**in that** the main visor body (1) has a latching device (15) symmetrically with respect to the rotary spindle (2), which latching device can be clipped into and unclipped from an associated latching socket (16), the latching socket (16) in turn being coupled to the main swivel spindle (5).

11. Sun visor according to at least one of the preceding claims,
**characterized**
**in that** a further planar, elongate visor body is provided as an auxiliary visor body (21) which, in the not-in-use position, is arranged between the main visor body (1) and the roof frame.

12. Sun visor according to Claim 11,
**characterized**
**in that** the auxiliary visor body (21) is mounted pivotably via associated clip arms (22) on the main swivel spindle (5) for swivelling the auxiliary visor body (21) about the main swivel spindle (5) from a not-in-use position into a use position and vice versa.

13. Sun visor according to Claim 11 or 12,
**characterized**
**in that** the clip arms (22) of the auxiliary visor body (21) are prestressed rotatably on the main swivel spindle (5) by means of a spring device (24) for prestressing the swivelling operation in a predetermined direction of rotation.

## Revendications

1. Pare-soleil pour véhicule à moteur, comprenant :
un corps de pare-soleil principal (1) allongé et plat, qui est monté à rotation sur un axe de rotation (2) s'étendant approximativement perpendiculairement à l'étendue longitudinale du corps de pare-soleil principal (1) ;
l'axe de rotation (2) étant accouplé à un axe de rabattement principal (5) pour le rabattement du corps de pare-soleil principal (1) d'une position de non utilisation dans une position d'utilisation (a ; b ; c) et vice versa, lequel est intégré, dans la position de non utilisation parallèlement à l'étendue longitudinale du corps de pare-soleil principal (1) et à distance de celui-ci, dans le toit (6) du véhicule automobile.

2. Pare-soleil selon la revendication 1,
**caractérisé en ce que**
l'axe de rabattement principal (5), vu dans la direction du côté avant du véhicule automobile, avant l'habillage du plafond, est intégré dans le cadre de toit dans la direction transversale du véhicule automobile.

3. Pare-soleil selon la revendication 1 ou 2,
**caractérisé en ce que**
l'axe de rabattement principal (5) est monté à rotation dans un palier principal (4) intégré dans le cadre de toit.

4. Pare-soleil selon la revendication 3,
**caractérisé en ce que**
le palier principal (4) présente un dispositif de ressort pour une précontrainte de l'axe de rabattement principal (5) dans une direction de rotation prédéterminée.

5. Pare-soleil selon au moins l'une quelconque des revendications précédentes,
**caractérisé en ce que**
l'axe de rotation (2) dans le corps de pare-soleil principal (1) est monté à rotation transversalement à l'étendue longitudinale de celui-ci, dans une portion latérale, de préférence dans la portion adjacente à la vitre latérale associée.

6. Pare-soleil selon au moins l'une quelconque des revendications précédentes,
**caractérisé en ce que**
l'axe de rotation (2) présente une extrémité recourbée (13) qui est accouplée à l'axe de rabattement principal (5).

7. Pare-soleil selon au moins l'une quelconque des revendications précédentes,
**caractérisé en ce que**
l'axe de rotation (2) est réalisé d'une seule pièce avec l'axe de rabattement principal (5) par le biais de l'extrémité recourbée (13).

8. Pare-soleil selon au moins l'une quelconque des revendications précédentes,
**caractérisé en ce que**
l'axe de rotation (2) présente une charnière (18) pour un basculement latéral du corps de pare-soleil principal (1) dans la direction de la vitre latérale associée du véhicule automobile, laquelle est de préférence prévue dans la région entre le corps de pare-soleil principal (1) et l'axe de basculement principal (5).

9. Pare-soleil selon au moins l'une quelconque des revendications précédentes,
**caractérisé en ce que**
dans la région du cadre de toit dans laquelle débouche l'axe de rotation (2), est prévu un système de bandeau (11) qui présente au moins un évidement (12) pour permettre un mouvement de rabattement de l'axe de rotation (2).

10. Pare-soleil selon au moins l'une quelconque des revendications précédentes,
**caractérisé en ce que**
le corps de pare-soleil principal (1) présente, symétriquement par rapport à l'axe de rotation (2), un système d'encliquetage (15) qui peut être enclipsé dans un logement d'encliquetage associé (16) et ressorti de celui-ci, le logement d'encliquetage (16) étant à nouveau accouplé à l'axe de rabattement principal (5).

11. Pare-soleil selon au moins l'une quelconque des revendications précédentes,
**caractérisé en ce que**
l'on prévoit un autre corps de pare-soleil allongé et plat en tant que corps de pare-soleil secondaire (21), qui est disposé dans la position de non utilisation entre le corps de pare-soleil principal (1) et le cadre de toit.

12. Pare-soleil selon la revendication 11,
**caractérisé en ce que**
le corps de pare-soleil secondaire (21) est monté de manière à pouvoir pivoter par le biais de bras en étrier associés (22) sur l'axe de rabattement principal (5) en vue d'un rabattement du corps de pare-soleil secondaire (21) autour de l'axe de rabattement principal (5) d'une position de non utilisation dans une position d'utilisation et vice versa.

13. Pare-soleil selon la revendication 11 ou 12,
**caractérisé en ce que**
les bras en étrier (22) du corps de pare-soleil secondaire (21) sont précontraints de manière rotative sur l'axe de rabattement principal (5) au moyen d'un dispositif de ressort (24) en vue d'une précontrainte de l'opération de rabattement dans le sens de rotation prédéterminé.
